# EUROPEAN PATENT APPLICATION

(11) **EP 3 895 584 A1**
(43) Date of publication of application: **20.10.2021**
(21) Application number: 19897027.9
(22) Date of filing: 31.10.2019
(51) Int. Cl.: A47J 19/02

(54) **JUICE EXTRACTOR AND SPIRAL-EXTRUDED JUICING SCREW THEREOF**

(30) Priority: 12.12.2018 CN 201811517212; 12.12.2018 CN 201822089622 U
(71) Applicant: Tian, Li, Zhuhai, Guangdong 528427 (CN); Zheng, Yongqing, Zhuhai, Guangdong 528427 (CN)
(72) Inventor: ZHANG, Xu, Zhuhai, Guangdong 528427 (CN); ZHU, Enshi, Zhuhai, Guangdong 528427 (CN)
(74) Representative: Zaboliene, Reda
(86) International application number: PCT/CN2019/114554
(87) International publication number: WO 2020/119313

(57) **Abstract**

The present invention discloses a juicer and a spiral extrusion juicing screw thereof. An extrusion juice portion is formed on a spiral portion on an outer side surface of the spiral extrusion juicing screw, an upper part of the extrusion juicing portion extends upwards in a spiral manner, an accommodating cavity capable of allowing a rotary central axis of the screw to penetrate is formed between an inner side surface of the upper part of the extrusion juicing portion and an inner wall of a filtering assembly of the juicer, the accommodating cavity may allow a food material with a size exceeding a radius of the screw to enter, and the rotary central axis of the screw is located in a horizontal projection plane of the accommodating cavity. According to the invention, a positioning shaft is not required, such that a vertical size of the screw is reduced, thereby reducing the volume of the juicer and material cost and facilitating transportation and storage; and meanwhile, the top of the extrusion juicing portion of the screw is eccentrically arranged, and the rotary central axis is located in a feeding channel outlet and the horizontal projection plane of the accommodating cavity, such that the size of the accommodating cavity is increased, the accommodating cavity may accommodate the food material with a size exceeding a radius of the filtering assembly, and the juicing effect and the juicing efficiency are improved.

## Description

### TECHNICAL FIELD

The present invention relates to the field of a juicer, and in particular to a juicer and a spiral extrusion juicing screw thereof.

### BACKGROUND

Fruits and vegetables are the main food for the human body to take in vitamins. Studies have shown that people who often eat fruits and vegetables are in better health than those who do not like fruits and vegetables. Especially in disease prevention, fruits and vegetables also play an irreplaceable role, which are the best products in a healthy diet. Although fruits and vegetables are rich in nutrition, many people do not like to eat them directly, but use a juicer to squeeze them into fruit and vegetable juice.

The existing juicer generally includes a machine base, a juice collecting cavity connected to the machine base, a screw and an extrusion filter cylinder which are arranged in the juice connecting cavity, and an upper lid which covers the juice collecting cavity. The upper lid is provided with a feeding channel communicating with the juice collecting cavity. Materials are driven by the screw to move downward after passing through the feeding channel and are extruded and juiced in a crushing gap between the juice collecting cavity and the extrusion filtering cylinder.

For example, Chinese invention patent CN103393338A discloses a juice extraction module for a juicer. The juice extraction module for the juicer includes a container, a filter screen, a spiral and a juice extraction module, thereby extracting juice from food. The top end of the container is coupled with a lid, and a feeding port is formed. Food is put through the feeding port. The juice extraction module includes a squeezing part and a squeezing treatment part, wherein the squeezing part is formed at the top end of the spiral in an upward narrowing manner, and a squeezing blade is formed on the squeezing part; the squeezing treatment part is connected to the feeding port, a concave surface is formed at the bottom of the lid for accommodating the squeezing part, and the squeezing blade squeezes the food in the squeezing treatment part. According to the solution, the food may be automatically provided to the spiral while being effectively squeezed, so that it is unnecessary to push the food and the use convenience is improved. However, the juicer has the following disadvantages:
(1) a positioning shaft is arranged at the top of the spiral, it is necessary to set the spiral higher to accommodate large food, and the discharging channel is offset, so that the volume of the whole device is increased, the material cost is increased, and transportation and storage are not facilitated;
(2) the discharging channel is offset, and the discharging channel and the feeding port are small, which leads to inconvenience of feeding, thereby affecting the juicing effect and the juicing efficiency.

In view of this, it is urgent to improve the existing juicer and depart from the setting form of the positioning shaft, so as to reduce the volume of the juice and the material cost, improve the convenience of feeding and enhance the juicing effect and the juicing efficiency.

### SUMMARY

The technical problems to be solved by the invention are that the existing juicer adopts a positioning shaft to connect a screw to cause higher setting of the screw, the discharging channel is offset to increase the whole volume, and feeding is inconvenient to lead to poor juicing effect and low juicing efficiency.

To solve the above technical problems, the technical solution adopted by the invention is to provide a spiral extrusion juicing screw of a juicer, wherein an extrusion juicing portion is formed on a spiral part on an outer side surface of the screw, an upper part of the extrusion juicing portion extends upward in a spiral manner, an accommodating cavity capable of allowing a rotary central axis of the screw to penetrate is formed between an inner side surface of the upper part of the extrusion juicing portion and an inner wall of a filtering assembly of the juicer, the accommodating cavity may allow a food material with a size exceeding a radius of the screw to enter, and the rotary central axis of the screw is located in a horizontal projection plane of the accommodating cavity.

In the above solution, the inner side surface of the upper part of the extrusion juicing portion and the top of the screw are smoothly and transitionally connected into a whole in the form of a concave arc surface.

The invention further provides a juicer. The juicer includes a detachable juicing cup and a cup lid, wherein a vertically arranged screw is arranged in the juicing cup and is driven by a driving device arranged at the bottom of the juicing cup, a periphery of the screw being sleeved with a filtering assembly;
a feeding channel is formed in a middle part of the cup lid; and
an extrusion juicing portion is formed on a spiral portion on an outer side surface of the screw, an accommodating cavity capable of allowing a food material to enter the filtering assembly is formed between an inner side surface of an upper end of the extrusion juicing portion and an inner wall of the filtering assembly, the accommodating cavity communicates with the feeding channel, and a rotary central axis of the screw and an inlet of the feeding channel are located in a horizontal projection plane of the accommodating cavity.

In the above solution, an annular flange is arranged on an outer side surface of the bottom of the screw, an annular groove is formed in a bottom surface of an inner cavity of a cup body, the annular flange is inserted into the annular groove, and a lower end of the filtering assembly is inserted into the annular groove and abuts against a top surface of the annular flange.

In the above solution, a limiting groove is formed in a bottom surface of the cup lid and is matched with an upper end of the filtering assembly; and after the cup lid is buckled, the limiting groove abuts against an upper end face of the filtering assembly.

In the above solution, the filtering assembly consists of a filter screen bracket, and a filter screen arranged on the filter screen bracket.

In the above solution, there is one or more filter screens, and a plurality of juice leaking holes are densely distributed in the filter screen.

In the above solution, the filter screen and the filter screen bracket are integrally formed, or the filter screen and the filter screen bracket are arranged detachably.

In the above solution, a plurality of strip-shaped ribs are arranged on an inner wall of the filtering assembly at intervals and are arranged along the longitudinal direction of the filtering assembly, and a transverse width of the strip-shaped ribs decreases gradually from top to bottom.

In the above solution, a surrounding plate is arranged at the top of the juicing cup, a plurality of L-shaped plates are arranged on an inner wall of the surrounding plate at intervals, clamping grooves are formed between the L-shaped plates and the top of the juicing cup, a clamping plate matched with each clamping groove is arranged at the bottom of the cup lid, a distance between each clamping groove may allow the clamping plate to insert, and the opening directions of all the clamping grooves are the same.

Compared with the prior art, the present invention has the following advantages: a positioning shaft is not required, such that a vertical size of the screw is reduced, thereby reducing the volume of the juicer and material cost and facilitating transportation and storage; and meanwhile, the top of the extrusion juicing portion of the screw is eccentrically arranged, and the rotary central axis is located in a feeding channel outlet and the horizontal projection plane of the accommodating cavity, such that the size of the accommodating cavity is increased, the accommodating cavity may accommodate the food material with a size exceeding a radius of the filtering assembly, and the juicing effect and the juicing efficiency are improved.

### BRIEF DESCRIPTION OF THE DRAWINGS

FIG. 1 is a schematic structural diagram of the present invention;
FIG. 2 is an exploded view of the present invention;
FIG. 3 is a sectional view of the present invention;
FIG. 4 is a schematic diagram of an internal structure of a filtering portion according to the present invention; and
FIG. 5 is a structural schematic diagram of a screw according to the present invention.

### DETAILED DESCRIPTION OF THE EMBODIMENTS

The present invention provides a juicer and a spiral extrusion juicing screw thereof. A positioning shaft is not required, such that a vertical size of the screw is reduced, thereby reducing the volume of the juicer and material cost and facilitating transportation and storage; and the size of the accommodating cavity is increased, the accommodating cavity may accommodate the food material with a size exceeding a radius of the filtering assembly, and the juicing effect and the juicing efficiency are improved. The present invention is described in detail with reference to the accompanying drawings and specific embodiments.

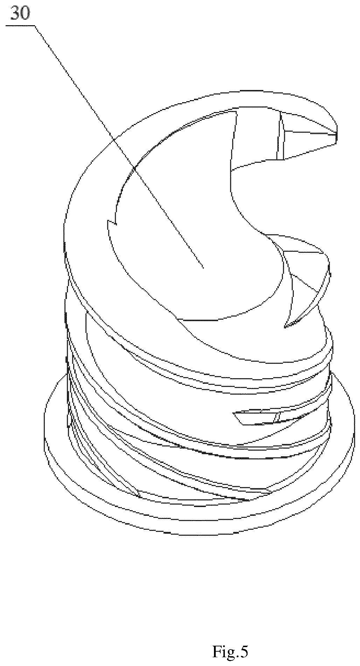

As shown in FIG. 5, the present invention provides a spiral extrusion juicing screw of a juicer. An extrusion juice portion is formed on a spiral portion on an outer side surface of the screw 30, an upper part of the extrusion juicing portion extends upwards in a spiral manner, an accommodating cavity capable of allowing a rotary central axis of the screw 30 to penetrate is formed between an inner side surface of the upper part of the extrusion juicing portion and an inner wall of a filtering assembly 40 of the juicer, the accommodating cavity may allow a food material with a size exceeding a radius of the screw 30 to enter, and the rotary central axis of the screw 30 is located in a horizontal projection plane of the accommodating cavity.

Further preferably, the inner side surface of the upper part of the extrusion juicing portion and the top of the screw 30 are smoothly and transitionally connected into a whole in the form of a concave arc surface, that is, a center positioning shaft is not arranged at the top of the screw 30, and an end face of the screw 30 does not need to extend out of the extrusion squeezing portion to be connected to a rotating shaft on the juicing cup 10, thereby avoiding occupying the space of the food accommodating cavity.

According to the invention, the top of the extrusion juicing portion is eccentrically arranged, the rotary central axis of the screw 30 is located in an outlet of a discharging channel 21 and a horizontal projection plane of the accommodating cavity, so that the size of the accommodating cavity is increased, and the accommodating cavity can accommodate a food material with a size exceeding a radius of a filtering assembly 40; and during use, it is unnecessary to cut fruit into small blocks, so as to prevent too much fruit from being stuck in the accommodating cavity and improving the use convenience and juicing efficiency.

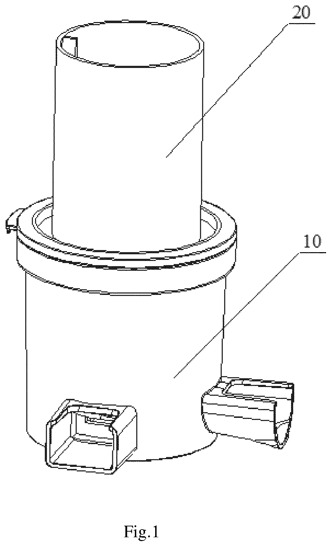

As shown in FIG. 1 to FIG. 5, the present invention further discloses a juicer. The juicer includes a detachable juicing cup 10 and a cup lid, wherein a vertically arranged screw 30 is arranged in the juicing cup 10, the screw 30 is driven by a driving device arranged at the bottom of the juicing cup 10, and a periphery of the screw 30 is sleeved with a filtering assembly 40.

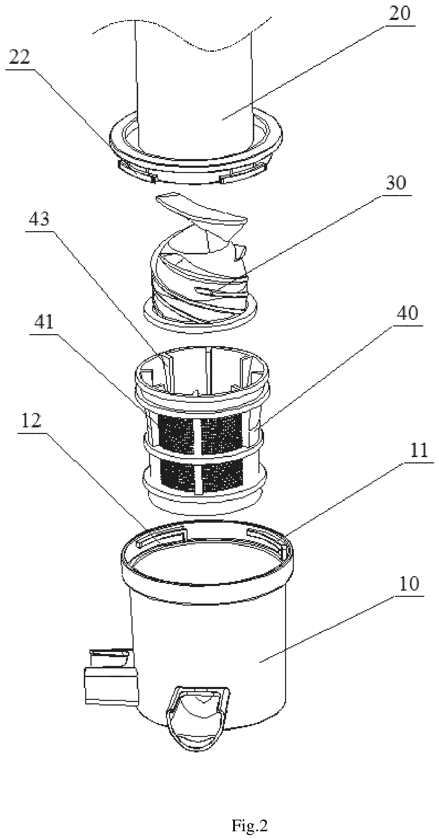

A feeding channel 21 is formed in a middle part of the cup lid 20. As shown in FIG. 2 and FIG. 5, the screw 30 is the spiral extrusion juicing screw 30 described above, that is, an extrusion juicing portion is formed on a spiral portion on an outer side surface of the screw 30, an accommodating cavity capable of allowing a food material to enter the filtering assembly 40 is formed between an inner side surface of the upper end of the extrusion juicing portion and an inner wall of the filtering assembly 40, the accommodating cavity communicates with the discharging channel 21, and a rotary central axis of the screw 30 and an inlet of the discharging channel 21 are located in a horizontal projection plane of the accommodating cavity.

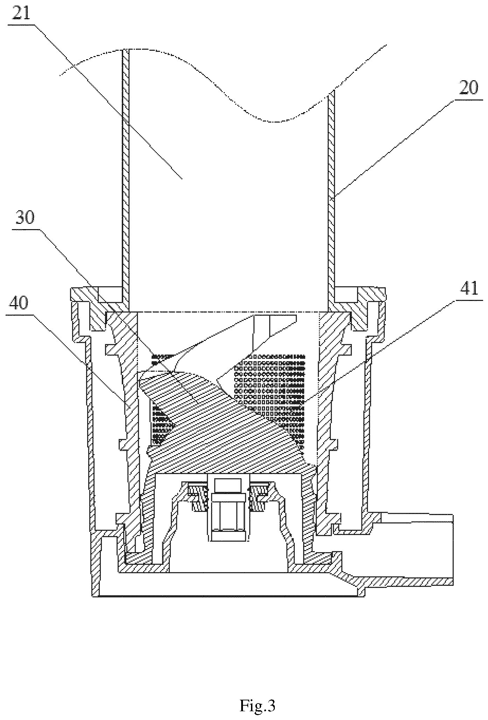

Preferably, as shown in FIG. 3, the discharging channel 21 is shaped like a straight cylinder and may effectively reduce the occupied space compared with the traditional design method. Meanwhile, it is convenient for the food material to directly enter the accommodating cavity through the discharging channel 21 without an external force, so that the use convenience is improved.

According to the juicer provided by the invention, a positioning shaft is not required, such that a vertical size of the screw 30 is reduced, thereby reducing the volume of the juicer and material cost, facilitating transportation and storage and enhancing the use convenience.

Further preferably, as shown in FIG. 2 and FIG. 3, an annular flange is arranged on an outer side surface of the bottom of the screw 30, an annular groove is formed in a bottom surface of an inner cavity of a cup body, the annular flange is inserted into the annular groove, and the lower end of the filtering assembly 40 is inserted into the annular groove and abuts against a top surface of the annular flange.

Moreover, a limiting groove is formed in a bottom surface of the cup lid 20 and is matched with the upper end of the filtering assembly 40. After the cup lid 20 is buckled, the limiting groove abuts against an upper end face of the filtering assembly 40.

According to the invention, the cup lid 20 abuts against the upper end face of the filtering assembly 40 and then abuts against the annular groove through the bottom of the filtering assembly 40, so that the stability of the juicer is enhanced in the juicing process.

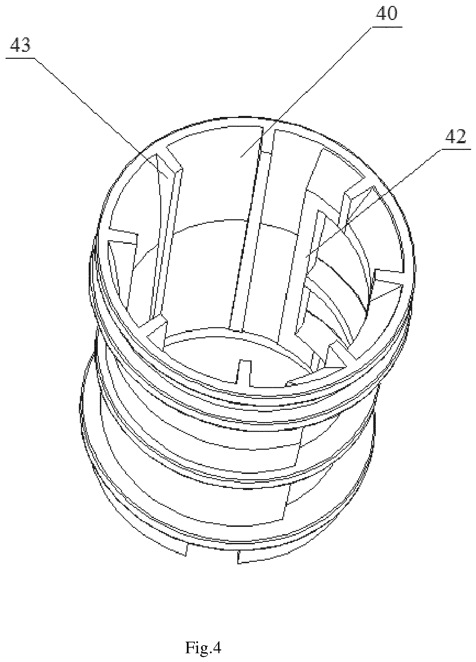

As shown in FIG. 4, the filtering assembly 40 consists of a filter screen bracket 42, and a filter screen 41 arranged on the filter screen bracket 42. Moreover, there is one or more filter screens 41, a plurality of juice leaking holes are densely distributed in the filter screen 41, the filter screen 41 is detachably arranged on the filter screen bracket 42, or the filter screen 41 and the filter screen bracket 42 are integrally formed.

The filter screen 41 is arranged detachably. By the design method, the filter screen 41 is convenient to clean and change. For example, if you want to clean the filter screen 41 after a period of use, the filter screen 41 may be taken out and cleaned, which is convenient in operation; or after the filter screen 41 is damaged, the filter screen 41 may be directly changed to save the cost.

When the filter screen 41 and the filter screen bracket 42 are integrally formed, it is convenient to produce with few processing procedures, and the production efficiency is improved.

Preferably, a plurality of strip-shaped ribs 43 are arranged on the inner wall of the filtering assembly 40 at intervals, and the strip-shaped ribs 43 are arranged along the longitudinal direction of the filtering assembly 40 to provide a resistance for rotation of the food material, that is, when the screw 30 drives the food material to rotate, the food material is blocked by the ribs 43 and is crushed through cooperation between the screw 30 and the ribs 43. Further preferably, a transverse width of the strip-shaped ribs 43 decreases gradually from top to bottom, so that the volume of the food material is reduced gradually and is finally extruded into juice.

Further preferably, a surrounding plate is arranged at the top of the juicing cup 10, a plurality of L-shaped plates 11 are arranged on an inner wall of the surrounding plate at intervals, clamping grooves 12 are formed between the L-shaped plates 11 and the top of the juicing cup 10, a clamping plate 22 matched with each clamping groove 12 is arranged at the bottom of the cup lid 20, a distance between each clamping groove 12 may allow the clamping plate 22 to insert, and the opening directions of all the clamping grooves 12 are the same.

During mounting, the cup lid 20 is buckled, so that the clamping plate 22 on the cup lid 20 penetrates through the gap between each clamping groove 12 until in contact with the top surface of the juicing cup 10, and then the cup lid is screwed, so that the clamping plate 22 is clamped into the clamping groove 12 to complete installation. According to the design method, the structure is simple and convenient to mount.

The present invention is not limited to the above optimal embodiments. Anyone should know that structural changes made under the enlightenment of the present invention and any technical solutions that are the same as or similar to the present invention all fall into the protection scope of the present invention.

## Claims

1. A spiral extrusion juicing screw of a juicer, wherein an extrusion juice portion is formed on a spiral portion on an outer side surface of the spiral extrusion juicing screw, an upper part of the extrusion juicing portion extends upwards in a spiral manner, an accommodating cavity capable of allowing a rotary central axis of the screw to penetrate is formed between an inner side surface of the upper part of the extrusion juicing portion and an inner wall of a filtering assembly of the juicer, the accommodating cavity may allow a food material with a size exceeding a radius of the screw to enter, and the rotary central axis of the screw is located in a horizontal projection plane of the accommodating cavity.

2. The spiral extrusion juicing screw of the juicer according to claim 1, wherein the inner side surface of the upper part of the extrusion juicing portion and the top of the screw are smoothly and transitionally connected into a whole in the form of a concave arc surface.

3. A juicer, comprising a detachable juicing cup and a cup lid, wherein a vertically arranged screw is arranged in the juicing cup and is driven by a driving device arranged at the bottom of the juicing cup, a periphery of the screw being sleeved with a filtering assembly;
a feeding channel is formed in a middle part of the cup lid; and
an extrusion juicing portion is formed on a spiral portion on an outer side surface of the screw, an accommodating cavity capable of allowing a food material to enter the filtering assembly is formed between an inner side surface of an upper end of the extrusion juicing portion and an inner wall of the filtering assembly, the accommodating cavity communicates with the feeding channel, and a rotary central axis of the screw and an inlet of the feeding channel are located in a horizontal projection plane of the accommodating cavity.

4. The juicer according to claim 3, wherein an annular flange is arranged on an outer side surface of the bottom of the screw, an annular groove is formed in a bottom surface of an inner cavity of a cup body, the annular flange is inserted into the annular groove, and a lower end of the filtering assembly is inserted into the annular groove and abuts against a top surface of the annular flange.

5. The juicer according to claim 3, wherein a limiting groove is formed in a bottom surface of the cup lid and is matched with an upper end of the filtering assembly; and after the cup lid is buckled, the limiting groove abuts against an upper end face of the filtering assembly.

6. The juicer according to claim 3, wherein the filtering assembly consists of a filter screen bracket, and a filter screen arranged on the filter screen bracket.

7. The juicer according to claim 6, wherein there is one or more filter screens, and a plurality of juice leaking holes are densely distributed in the filter screen.

8. The juicer according to claim 7, wherein the filter screen and the filter screen bracket are integrally formed, or the filter screen and the filter screen bracket are arranged detachably.

9. The juicer according to claim 3, wherein a plurality of strip-shaped ribs are arranged on an inner wall of the filtering assembly at intervals and are arranged along the longitudinal direction of the filtering assembly, and a transverse width of the strip-shaped ribs decreases gradually from top to bottom.

10. The juicer according to claim 3, wherein a surrounding plate is arranged at the top of the juicing cup, a plurality of L-shaped plates are arranged on an inner wall of the surrounding plate at intervals, clamping grooves are formed between the L-shaped plates and the top of the juicing cup, a clamping plate matched with each clamping groove is arranged at the bottom of the cup lid, a distance between each clamping groove may allow the clamping plate to insert, and the opening directions of all the clamping grooves are the same.
